(19) Europäisches Patentamt / European Patent Office / Office européen des brevets

(11) **EP 2 563 871 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(51) Int Cl.:
***C09J 7/24*** *(2018.01)*

(21) Anmeldenummer: **11713821.4**

(22) Anmeldetag: **12.04.2011**

(86) Internationale Anmeldenummer:
**PCT/EP2011/055697**

(87) Internationale Veröffentlichungsnummer:
**WO 2011/134782 (03.11.2011 Gazette 2011/44)**

(54) **DOPPELSEITIG SELBSTKLEBENDE PRODUKTE MIT HOHER OPTISCHER QUALITÄT**

DOUBLE-SIDEDLY SELF-ADHESIVE PRODUCTS WITH HIGH OPTICAL QUALITY

PRODUITS AUTO-ADHÉSIFS DOUBLE FACE PRÉSENTANT UNE QUALITÉ OPTIQUE ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2010 DE 102010028184**

(43) Veröffentlichungstag der Anmeldung:
**06.03.2013 Patentblatt 2013/10**

(73) Patentinhaber: **tesa SE**
**22848 Norderstedt (DE)**

(72) Erfinder:
• **DOLLASE, Thilo**
**22397 Hamburg (DE)**
• **KOOP, Matthias**
**22848 Norderstedt (DE)**
• **SCHREIBER, Ralph**
**22763 Hamburg (DE)**

(56) Entgegenhaltungen:
**EP-A1- 1 953 191**

• **"STANDARD TEST METHOD FOR HAZE AND LUMINOUS TRANSMITTANCE OF TRANSPARENT PLASTICS", ASTM DESIGNATION, ASTM INTERNATIONAL, US, Bd. D1003, 1. Juli 2000 (2000-07-01), Seiten 1-06, XP001179974, in der Anmeldung erwähnt**

EP 2 563 871 B1

**Beschreibung**

Die vorliegende Erfindung betrifft die Verwendung haftklebrige Produkte mit einem Haze-Wert von 5 % oder weniger, umfassend einen Träger mit einer ersten Oberfläche und einer zweiten Oberfläche sowie eine erste, auf der ersten Oberfläche des Trägers angeordnete Haftklebmassenschicht, und eine zweite, auf der zweiten Oberfläche des Trägers angeordnete Haftklebmassenschicht, wobei der Träger einen Elastizitätsmodul von 2,5 - 500 MPa aufweist. beim Verklebung optischer Bauteile, d.h. in der Verklebung von Bauteilen, bei denen zumindest eines der Bauteile transparent ist und die Bauteile starr (z.B. Glas) oder flexibel (z.B. Folien) sind, sowie Gegenstände umfassend Bauteile, die mit einem erfindungsgemäßen doppelseitig haftklebrigen Produkt verklebt sind.

*Stand der Technik*

In bestimmten Verklebungen optischer Bauteile müssen bauliche Schicht-Abstände von bis zu 500 $\mu$m und höher stofflich durch Klebmassen ausgefüllt werden, ohne dass es zu Lufteinschlüssen kommt. Hierzu können im Prinzip Flüssigkleber, Transferklebebänder sowie doppelseitige Klebebänder mit Träger zum Einsatz kommen.

Der Einsatz von Flüssigklebern ist mit Problemen der optischen Qualität sowie mit Problemen beim Verkleben nämlich der Handhabbarkeit selbst verbunden (Handling). So kann es bei ihrem Einsatz zu Blasenbildung oder Schrumpf kommen, was die optische Qualität stark verringert. Der bei Flüssigklebern erforderliche Härtungsvorgang verkompliziert und verlängert zudem den Verklebungsprozess.

Doppelseitig selbstklebende Produkte wie Transferklebebänder und doppelseitige Klebebänder mit Träger zeichnen sich durch eine einfachere Handhabbarkeit und Prozessierbarkeit aus. Ihr hoher Nutzen in Anwendungsbereichen des verbindenden Klebens ergibt sich im Falle entsprechender Klebmassen aus der Haftklebrigkeit der Produktoberflächen und der Tatsache, dass die verwendeten Klebemassen nach einer Applikation nicht aushärten müssen.

Aus dem Stand der Technik bekannte doppelseitige Klebebänder mit Träger, die aufgrund ihrer Eigenschaft für optische Anwendungen in Frage kommen, enthalten steife Trägermaterialien wie z.B. Polyester. Da solche Träger relativ steif sind, ist das Anpassungsvermögen des gesamten Klebeproduktes zu gering und es kommt zu Lufteinschlüssen am Übergang von flachen zu erhabenen Bereichen. Diese Probleme treten insbesondere dann auf, wenn man versucht, diese Produkte zum Ausgleich topographischer Eigenheiten einzusetzen. Neben der Aufgabe, anwendungsspezifische Abstände stoffschlüssig auszufüllen, kommen jedoch seit einiger Zeit verstärkt gerade solche Anforderungen auf doppelseitig selbstklebende Produkte zu, bei denen das Klebeprodukt topographische Eigenheiten der zu verklebenden Substrate ausgleichen soll. In diesem Zusammenhang sei auf topographische Eigenschaften der zu verklebenden Oberflächen bzw. Bauteilen wie Welligkeit, Rauhigkeit, Krümmung, Biegung und Strukturierungen jedweder Art hingewiesen. Die auszugleichenden topographischen Unterschiede können dabei im Bereich von einigen 10 nm (Rauhigkeit) bis zu einigen 100 $\mu$m (Krümmung, Biegung) liegen. Der Einsatz herkömmlicher doppelseitiger Klebebänder mit Träger scheidet dabei aufgrund der Steifheit üblicher Trägermaterialien in den genannten Anwendungen im Falle größerer topographischer Unterschiede aus.

Die EP 1 953 191 A beschreibt ein haftklebriges Produkt mit zumindest einer Haftklebemassenschicht und bestimmten optischen Eigenschaften, umfassend einen Träger aus einem Blend eines Polymilchsäurepolymeren und eines Acryl-TriblockCopolymeren, jedoch keine Verwendung eines solchen Produkts für optische Bauteile mit größeren topografischen Unterschieden.

Topographische Eigenheiten der zu verklebenden Substrate können besser durch (trägerlose) Transferklebebänder ausgeglichen werden. Bekannte Transferklebebänder sind in der Lage, topographische Unterschiede im Bereich von einigen 10 nm (Rauigkeit) bis zu etwa 100 $\mu$m auszugleichen.

Der Einsatz von Transferklebebändern in optischen Anwendungen zum Ausgleich größerer topographischer Unterschiede von bis zu 500 $\mu$m oder mehr scheitert jedoch an der Verfügbarkeit geeigneter Transferklebebänder mit entsprechenden Schichtdicken beziehungsweise an optischen Problemen, die aus den Herstellungsverfahren der genannten Transferklebebänder resultieren. Transferklebebänder dieser Dicke werden typischerweise lösungsmittelfrei hergestellt. Beschichtungsbilder optisch höchster Qualität sind so nicht zugänglich. Des Weiteren ergeben sich mit Transferklebebändern hoher Schichtdicke Probleme bezüglich ihrer Prozessierbarkeit, wenn aus Lösung beschichtet wird. So korreliert die Trocknungsgeschwindigkeit der Transferklebebänder im Herstellungsprozess mit der Schichtdicke, wodurch sich geringe Trocknungsgeschwindigkeiten bei hohen Schichtdicken einstellen. Ferner kommt es bei der Weiterverarbeitung von Transferklebebändern hoher Schichtdicken z. B. in Stanzprozessen zu technischen Schwierigkeiten. Ein Grund hierfür ist die verstärkte Tendenz zu einem Ausbluten der Klebmasse (Oozing). Auch Seitenkantenklebrigkeit erhöht sich bei Transferklebebändern hoher Schichtdicke, was wiederum die Handhabbarkeit und die Weiterverarbeitbarkeit erschwert.

Insofern besteht eine Notwendigkeit zur Bereitstellung von optisch hochwertigen Produkten, die einerseits ein Ausfüllen baulicher Schichtabstände sowie den Ausgleich topographischer Unterschiede bei der Verklebung optischer Bauteile ermöglichen, ohne dass es zu Lufteinschlüssen kommt, und andererseits eine gute Prozessierbarkeit gewährleisten wie reduzierte Klebmasseausblutungsneigung und gute Stanzbarkeit.

*Erfindung*

Zur Lösung der genannten Probleme schlägt die vorliegende Erfindung die Verwendung doppelseitiger haftklebriger Produkte mit einem Haze-Wert von 5 % oder weniger vor, umfassend einen Träger, bestehend aus Triblockcopolymeren aus Polymethylmethacrylat-Endblöcken und Polybutylacrylat-Mittelblöcken, mit einer ersten Oberfläche und einer zweiten Oberfläche sowie eine erste, auf der ersten Oberfläche des Trägers angeordnete Haftklebmassenschicht auf (Meth)acrylatbasis, und eine zweite, auf der zweiten Oberfläche des Trägers angeordnete Haftklebmassenschicht auf (Meth)acrylatbasis, wobei der Träger einen Elastizitätsmodul von 2,5 - 500 MPa aufweist, beim Verkleben optischer Bauteile, die topographische Höhenunterschiede von mehr als 100 $\mu$m aufweisen. Mit anderen Worten betrifft die vorliegende Erfindung die Verwendung bestimmter doppelseitiger haftklebriger Produkte für die genannten, optischen hochwertigen Anwendungen mit einem Träger und einer auf der Vorderseite des Trägers angeordneten ersten Haftklebmassenschicht sowie einer auf der Rückseite des Trägers angeordneten zweiten Haftklebmassenschicht, wobei der Träger den genannten Elastizitätsmodul aufweist. Der Elastizitätsmodul (bestimmt gemäß Testmethode A) gibt dabei den mechanischen Widerstand an, den ein Werkstoff einer elastischen Verformung entgegensetzt.

In einer bevorzugten Ausführungsform der Erfindung weist der Träger erfindungsgemäß verwendeter haftklebriger Produkte einen Elastizitätsmodul von 5 - 250 MPa auf. In einer ebenfalls bevorzugten Ausführungsform weisen die erfindungsgemäß verwendeten doppelseitig haftklebrigen Produkte einen Haze-Wert von höchstens 2 % auf. Liegt das Elastizitätsmodul des Trägers erfindungsgemäßer Produkte in dem genannten Bereich von 2,5 - 500 MPa, bevorzugt 5 - 250 MPa, so wird eine sehr vorteilhafte Anpassungsfähigkeit an eine gegebene Substratoberflächentopographie erreicht in Kombination mit immer noch verringerter Tendenz zum Ausbluten von Klebemasse.

Bevorzugt beträgt die Tendenz zum Ausbluten von Klebemasse (siehe hierzu Test C) für erfindungsgemäß verwendete Produkte höchstens 10 %. Liegt das Oozing-Verhältnis OR (gemessen nach Testmethode C) oberhalb dieses Wertes, führt dies bereits zu ausgeprägter Seitenkantenklebrigkeit.

Der Träger erfindungsgemäß verwendeter haftklebriger Produkte kann ein- oder mehrschichtig aufgebaut sein, so dass erfindungsgemäße haftklebrige Produkte wenigstens eine Trägerschicht aufweisen. Die zumindest eine Trägerschicht kann aus einer einzigen Materiallage aufgebaut sein oder aus mehreren. Eine etwaige Mehrschichtigkeit / Mehrlagigkeit kann das Resultat eines Kaschierprozesses verschiedener Einzellagen sein und/oder auch eines Coextrusionsprozesses, nur um zwei Beispiele zu nennen. Kommen mehrere Trägerschichten zum Einsatz, dann können die jeweils zueinander ausgerichteten Oberflächen direkt in Kontakt sein oder über eine oder weitere Zwischenschichten wie weitere Haftklebeschichten oder auch andere Klebschichten wie Heiß- oder Kaltsiegelschichten miteinander verbunden sein. Bevorzugt ist der Träger erfindungsgemäßer haftklebriger Produkte einschichtig.

Der Träger der doppelseitig haftklebrigen Produkte weist eine Schichtstärke zwischen 4 $\mu$m und 1000 $\mu$m, besonders bevorzugt zwischen 25 $\mu$m und 250 $\mu$m auf. In einer Ausführungsform der Erfindung kommen als Träger Folien zum Einsatz, wobei auch andere geeignete Trägermaterialien wie freistehende viskoelastische oder elastische Lackschichten verwendet werden können. Es können mehr als eine Trägerfolie zum Einsatz kommen, die unabhängig voneinander im Hinblick auf Rohstoffklasse, Formulierung, chemische Eigenschaften, physikalische Eigenschaften, Oberflächenbehandlung und/oder Dicke ausgewählt werden können. Die als Träger verwendeten Folien können monoaxial oder biaxial verstreckt sein oder aber in nicht orientiertem Zustand zum Einsatz kommen.

Als Basismaterial für Träger bieten sich thermoplastische Elastomere an, die ggf. auch in Kombination mit etwaigen weiteren Zuschlagsstoffen die Kriterien des Elastizitätsmoduls und der optischen Eigenschaften erfüllen. Die Elastomere weisen einen hohen elastischen Anteil auf. Bevorzugt liegt dieser bei mindestens 80 %, bevorzugt bei mindestens 90 %, jedoch ist auch ein viskoelastisches Verhalten mit geringerem elastischem Anteil möglich. Der elastische Anteil der doppelseitig haftklebrigen Produkte liegt ebenfalls bevorzugt bei mindestens 80 %, sehr bevorzugt bei mindestens 90 %, jedoch ist auch hier ein viskoelastisches Verhalten mit geringerem elastischem Anteil möglich.

Das Basismaterial für die Träger der erfindungsgemäßen Produkte weist zumindest eine Phase auf, die eine Erweichungstemperatur von unter 25 °C, bevorzugt von unter 0 °C aufweist, die sogenannte Elastomer- oder Weichphase. Diese Phase liegt sehr bevorzugt zu mehr als 25 Gew.-% vor und ist durch Mischung oder durch chemischen Einbau Teil des Basismaterials der zumindest einen Trägerschicht.

Besonders vorteilhaft für den Träger einsetzbare thermoplastische Elastomere sind Blockcopolymere. Dabei sind einzelne Polymerblöcke kovalent miteinander verknüpft. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen (Hartblöcke), und die über zumindest einen Polymerblock mit einer Erweichungstemperatur von höchstens 0 °C, bevorzugt höchstens -30 °C (Weichblöcke), in der Polymerkette voneinander separiert sind.

Erfindungsgemäß werden als thermoplastische Elastomere für die Träger erfindungsgemäß verwendeter Produkte Triblockcopolymere bestehend aus Polymethylmethacrylat-Endblöcken und Polybutylacrylat-Mittelblöcken, wie erhältlich als LA-Polymer® von Fa. Kuraray, eingesetzt.

Zur Herstellung eines Trägers kann es auch hier angebracht sein, Additive und weitere Komponenten hinzuzugeben, die die filmbildenden Eigenschaften verbessern, die Neigung zur Ausbildung von kristallinen Segmenten vermindern, die Erweichungstemperaturen der weichen und/oder harten Phasen einzustellen und/oder die mechanischen Eigenschaften gezielt zu verbessern oder auch gegebenenfalls zu verschlechtern. Als optional einsetzbare Weichmacher können alle aus der Selbstklebebandtechnologie bekannten weichmachenden Substanzen eingesetzt werden. Dazu zählen unter anderem die paraffinischen und naphthenischen Öle, (funktionalisierte) Oligomere wie Oligobutadiene und -isoprene, flüssige Nitrilkautschuke, flüssige Terpenharze, pflanzliche und tierische Fette und Öle, Phthalate und funktionalisierte Acrylate. Es können zudem Antistatika, Sntiblockmittel, Antioxidantien, Lichtschutzmittel und Gleitmittel eingesetzt werden (siehe z. B. J. Murphy, The Additives for Plastics Handbook, 1996, Elsevier, Oxford, S. 2 - 9).

Als Haftklebemassen für die erste und die zweite Haftklebmassenschicht sowie ggf. für beliebige weitere Haftklebmasseschichten in erfindungsgemäßen doppelseitig haftklebrigen Produkten können unabhängig voneinander für die verschiedenen Haftklebmasseschichten alle linearen, sternförmigen, verzweigten, gepfropften oder andersartig gestalteten (Meth)acrylat-Polymere, bevorzugt Homopolymere, statistische Copolymere oder Blockcopolymere, zum Einsatz kommen. (Meth)acrylat-Polymere können in Reinform oder als Gemisch mit anderen Zuschlagsstoffen und/oder weiteren Polymeren Verwendung finden. Polymergemische können aus (Meth)acrylat-Polymeren verschiedener Art wie Zusammensetzung, Struktur und/oder Molmasse aufgebaut sein.

Die Molmassenverteilung geeigneter Polymere für Haftklebemassen weist ein gewichtsmittleres Molekulargewicht $M_W$ von bevorzugt zwischen 150 000 g/mol und 5 000 000 g/mol auf, sehr bevorzugt zwischen 250 000 g/mol und 2 000 000 g/mol. Die Polydispersität, gegeben als Quozient aus gewichtsmittlerer und zahlenmittlerer Molmasse $D = M_W / M_N$ liegt bevorzugt oberhalb 1,5.

Sehr geeignet sind auch Haftklebemassen basierend auf (Co)polymeren mit multimodaler, insbesondere bimodaler Molekulargewichtsverteilung. Multimodale Systeme weisen in der Molmassenverteilung mehrere Maxima auf. Zum Beispiel durch Einfluss von Reglern können kurzkettige Polymere hergestellt werden, die dann in zum Beispiel binären Polymermischungen, also Mischungen bestehend aus zwei Lösungen oder Dispersionen von Polymeren unterschiedlichen Molekulargewichts, formuliert werden. Es ist jedoch auch denkbar, die Molekulargewichtsverteilung in einer Polymerisation so zu steuern, dass das resultierende Polymerisat bereits aus dieser einen einzigen Polymerisation durch zwei oder sogar mehrere Kurvenmaxima in der Molekulargewichtsverteilung charakterisiert ist. Gleichbedeutend für solche Polymerisate oder die zuvor angeführten Polymermischungen bezieht sich jedes dieser Maxima auf eine sogenannte Polymermode. Im Fall von zwei Maxima spricht man entsprechend von einer bimodalen Molekulargewichtsverteilung oder vereinfacht von bimodalen Polymeren. Verteilungen mit mehr als zwei Maxima nennt man entsprechend trimodal bei drei Maxima usw. Allgemein werden im Sinne dieser Erfindung Polymere als multimodal bezeichnet, die mehr als ein Kurvenmaximum in der Molekulargewichtsverteilung aufweisen.

Kommen Haftklebmassen auf Basis von (Co)polymeren mit multimodaler Molekulargewichtsverteilung zum Einsatz, so liegt die Molmasse $M_P$ zumindest einer, bevorzugt der langkettigsten Polymermode bei mindestens 500 000 g/mol, bevorzugt bei mindestens 1 000 000 g/mol. In diesem Zusammenhang sei angemerkt, dass unter den in dieser Offenbarung aufgeführten Molekulargewichten solche zu verstehen sind, die über gelpermeationschromatographische Bestimmungen erhalten werden. Gelöste Proben der betreffenden (Co)polymere werden danach nach ihrem hydrodynamischen Volumen getrennt und die resultierenden Fraktionen zeitversetzt detektiert. Das Molekulargewicht der einzelnen Fraktionen wird nach Kalibrierung über Polystyrol-Standards angegeben. Das Zahlenmittel $M_N$ entspricht dem ersten Moment der Molekulargewichtsverteilung, das Gewichtsmittel $M_W$ dem zweiten. Diese Werte werden rechnerisch aus den Messkurven ermittelt. Lokale Maxima der Verteilungen Mp(i) für die Polymermode i werden entweder ebenfalls über die Auswertesoftware mathematisch oder graphisch ermittelt.

Bevorzugt wird außerdem eine Erweichungstemperatur von kleiner als 20 °C, bevorzugt von kleiner als 0 °C. Unter Erweichungstemperatur sei in diesem Zusammenhang die quasistatische Glasübergangstemperatur für amorphe Systeme und die Schmelztemperatur für semikristalline Systeme verstanden, die beispielsweise durch dynamisch differentialkalorimetrische Messungen bestimmt werden können. Sind Zahlenwerte für Erweichungstemperaturen angegeben, dann beziehen sich diese bei amorphen Systemen auf die Mittelpunktstemperatur der Glasstufe und bei semikristallinen Systemen auf die Temperatur bei maximaler Wärmetönung während des Phasenübergangs.

Als Haftklebemassen kommen erfindungsgemäß acrylatbasierende Haftklebemassen zum Einsatz. Als Beispiele, aber ohne eine Einschränkung vornehmen zu wollen, seien als vorteilhaft im Sinne dieser Erfindung statistische Copolymere ausgehend von unfunktionalisierten α,β-ungesättigten Estern und statistische Copolymere ausgehend von unfunktionalisierten Alkylvinylethern genannt. Bevorzugt werden α,β-ungesättigte Carbonsäuren und ihre Derivate der allgemeinen Struktur

$$CH_2=C(R^1)(COOR^2) \qquad (I)$$

verwendet, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z. B. 2-Ethylhexylacrylat und isoOctylacrylat sowie cyclische Monomere wie z. B. Cyclohexyl- oder Norbornylacrylat und Isobornylacrylat.

Ebenfalls einsetzbar als Monomere sind Acryl- und Methacrylsäureester, die aromatische Reste enthalten, wie z. B. Phenylacrylat, Benzylacrylat, Benzoinacrylat, Phenylmethacrylat, Benzylmethacrylat oder Benzoinmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen oder Heterozyklen in $\alpha$-Stellung enthalten. Für die optional einsetzbaren Vinylmonomere seien beispielhaft ausgewählt erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol und $\alpha$-Methylstyrol.

Weitere erfindungsgemäß für die verwendeten Haftklebmassen einsetzbare Monomere sind Glycidylmethacrylat, Glycidylacrylat, Allylglycidylether, 2-Hydroxyethylmethacrylat, 2-Hydroxyethylacrylat, 3-Hydroxypropylmethacrylat, 3-Hydroxypropylacrylat, 4-Hydroxybutylmethacrylat, 4-Hydroxybutylacrylat, Acrylsäure, Methacrylsäure, Itaconsäure und deren Ester, Crotonsäure und deren Ester, Maleinsäure und deren Ester, Fumarsäure und deren Ester, Maleinsäureanhydrid, Methacrylamid sowie N-alkylierte Derivate, Acrylamid sowie N-alkylierte Derivate, N-Methylolmethacrylamid, N-Methylolacrylamid, Vinylalkohol, 2-Hydroxyethylvinylether, 3-Hydroxypropylvinylether und 4-Hydroxybutylvinylether.

Als optional einsetzbare Weichmacher können alle aus der Selbstklebebandtechnologie bekannten weichmachenden Substanzen eingesetzt werden. Dazu zählen unter anderem die paraffinischen und naphthenischen Öle, (funktionalisierte) Oligomere wie Oligobutadiene und -isoprene, flüssige Nitrilkautschuke, flüssige Terpenharze, pflanzliche und tierische Fette und Öle, Phthalate und funktionalisierte Acrylate. Haftklebmassen, wie sie oben angegeben sind, können neben den genannten optionalen Weichmachern weitere Bestandteile wie rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel sowie optional Lösungsmittel enthalten.

Als optional einsetzbare klebrigmachende Harze sind in Kombination mit den genannten und weiteren Klebmassegrundpolymeren oder -grundpolymergemischen ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und / oder Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Weitere Polymere können ebenfalls eingesetzt werden insbesondere zu dem Zweck, die mechanischen Eigenschaften der Weichphasen und/oder etwaiger Hartphasen wunschgemäß einzustellen. Beispielsweise kann durch Zugabe eines hartblockkompatiblen Harzes / Polymers der Mengenanteil der Hartphase in der Gesamtmischung erhöht werden.

Haftklebmassen, wie sie oben angegeben sind, können zudem weitere Bestandteile wie rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel sowie optional Lösungsmittel enthalten.

In einer besonderen Ausführungsform der Erfindung werden die verschiedenen Schichten / Lagen erfindungsgemäßer doppelseitig haftklebriger Produkte, also in der einfachsten Gestaltungsform durch Wahl des Trägers, der ersten Haftklebmasseschicht und der zweiten Haftklebmassenschicht, durch Auswahl von Formulierungsbestandteilen und/oder der Zusammensetzung einzelner Bestandteile so aufeinander abgestimmt, dass sich die Brechnungsindices der einzelnen Schichten so wenig wie möglich voneinander unterscheiden. Je geringer der Brechungsindexunterschied zwischen miteinander in Kontakt befindlichen Schichten, desto geringer ist der Verlust an transmittiertem Licht durch Grenzflächenreflexion. Ein Brechungsindexunterschied von kleiner 0,1, insbesondere von kleiner 0,01 ist vorteilhaft und kann realisiert werden, um nur ein nicht einschränkendes Beispiel zu nennen, durch Wahl von Haftklebeschichten basierend auf Acrylatcopolymeren aliphatischer Natur und einer Trägerschicht ebenfalls basierend auf Acrylatcopolymeren aliphatischer Natur.

Um die haftklebrigen Oberflächen bis zum Anwendungszeitpunkt gegen Verschmutzung und ungewolltes vorzeitiges Verkleben zu schützen, werden sie typischerweise temporär mit wiederablösbaren Hilfsträgermaterialen, sogenannten Trennlinern, eingedeckt. Handelt es sich bei den doppelseitig haftklebrigen Produkten um Blattware, dann wird zur Eindeckung der Unterseite ein Blatt eines Trennlinermaterials verwendet und für die Oberseite ein zweites. Werden die doppelseitig haftklebrigen Produkte in Rollenform konfektioniert, dann können ebenfalls zwei Trennlinermaterialien zum Einsatz kommen oder auch eine einzige Bahn, die vorder- und rückseitig so vorbereitet ist, dass sie sich zum Zeitpunkt der Anwendung vom selbstklebenden Produkt zunächst von einer haftklebrigen Oberfläche und danach von der zweiten wieder ablösen lassen.

Erfindungsgemäße doppelseitig haftklebrige Produkte tragen also eine erste und eine zweite Trennschicht sowie einen hierzwischen angeordneten Verbund enthaltend zumindest eine Trägerschicht und zwei Haftklebeschichten. Handelt es sich bei den Trennschichten um Trennschichten unterschiedlicher Trennliner, so können die verwendeten Liner eine unterschiedliche Form und/oder Größe aufweisen. Zum Beispiel kann ein Trennliner in seinen Abmessungen den selbstklebenden Verbund und den anderen Trennliner überragen. Ebenfalls vorstellbar ist ein Produktaufbau, in dem die Trennliner die gleiche Form und/oder Größe aufweisen und den selbstklebenden Verbund in Form und/oder Größe überragen. In einer Ausführungsform kann das doppelseitig haftklebrige Produkt in Form entsprechend einer Etikettenbahn ausgebildet sein. So kann z. B. ein erster Trennliner bahnförmig ausgebildet sein, während der selbstklebende Verbund in Form sich wiederholender z. B. durch Stanzen vereinzelter (ähnlich etikettenförmiger) Abschnitte hierauf aufgebracht ist. Der zweite Trennliner kann dann ebenfalls lediglich auf im Bereich des selbstklebenden Verbunds wiederkehrende Abschnitte beschränkt sein oder eine Form und/oder Größe aufweisen, die im Wesentlichen der Form und/oder Größe des ersten Trennliners entspricht. In letzterem Fall sind jedoch in einer vorteilhaften Ausführungsform im Bereich der Haftklebemasseflächen Stanzungen in dem zweiten Trennliner vorgesehen.

Trennliner bestehen typischerweise aus einer Trägerfolie, die ein- oder beidseitig mit einem Trennlack, der bevorzugt auf Silikon basiert, ausgestattet ist. In einer bevorzugten Auslegung dieser Erfindung werden als Trägermaterial für die Trennliner Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit. In einer besonders bevorzugten Ausführungsform dieser Erfindung werden Polyester auf Basis von Polyethylenterephthalat (PET) als Trägermaterial für die Trennliner eingesetzt. Insbesondere spezielle hochtransparente PET Folien können eingesetzt werden. So eignen sich z.B. Folien der Firma Mitsubishi mit dem Handelsnamen Hostaphan™ oder der Firma Toray mit dem Handelsnamen Lumirror™ oder der Firma DuPont Teijin mit dem Handelsnamen Melinex™.

Weiterhin kommen diverse Papiere, optional auch in Kombination mit einer stabilisierenden Extrusionsbeschichung, als Trägermaterial für Trennliner in Frage. Alle genannten Trennliner erhalten durch einen oder mehrere Beschichtungsgänge beispielsweise aber bevorzugt mit einem Silikon-basierenden Release, ihre antiadhäsiven Eigenschaften. Der Auftrag kann dabei ein- oder beidseitig erfolgen.

Trennliner können zudem eine Fluoro-Silikonisierung als Trennmittel tragen. Dies ist insbesondere vorteilhaft zur Eindeckung von silikonbasierenden Haftklebemasseschichten. Neben Fluoro-Silikonsystem kommen bevorzugt auch Beschichtungen aus fluorierten Kohlenwasserstoffen auf Trennlinern in Betracht.

Alle dem Fachmann geläufigen Konzepte zur Einstellung der Trenneigenschaften der Trennschichten sind im Sinne dieser Erfindung prinzipiell einsetzbar. Zusammenstellungen von Steuermöglichkeiten stellen Satas, Kinning und Jones zusammen [D. Satas in "Handbook of Pressure Sensitive Adhesives Technology", D. Satas (ed.), 3. Aufl., 1999, Satas & Associates, Warwick, S. 632 - 651; D. J. Kinning, H. M. Schneider in "Adhesion Science and Engineering - Band 2: Surfaces, Chemistry & Applications", M. Chaudhury, A. V. Pocius (Hrsg.), 2002, Elsevier, Amsterdam, S. 535 - 571; D. Jones, Y. A. Peters in "Handbook of Pressure Sensitive Adhesives Technology", D. Satas (ed.), 3. Aufl., 1999, Satas & Associates, Warwick, S. 652 - 683]. Dies ist wichtig bei beidseitigen Trennlinern oder bei Produktdesigns mit zwei Trennlinern. Für eine gute Handhabbarkeit müssen die Trennkräfte der beiden Trennschichten abgestuft sein.

Bei den doppelseitig haftklebrigen Produkten, die in dem erfindungsgemäßen Verfahren verwendet werden, handelt es sich um doppelseitige Klebebänder, -etiketten oder - folien.

Die Masseaufträge der zumindest einen ersten und zumindest einen zweiten und ggf. beliebiger weiterer Haftklebeschichten können unabhängig voneinander gewählt werden. Sie liegen zwischen 1 g/m$^2$ und 500 g/m$^2$, insbesondere zwischen 10 g/m$^2$ und 250 g/m$^2$.

Kommen zwei Trennliner bei der Eindeckung zum Einsatz, so kann ihre Dicke gleich oder verschieden sein. Bevorzugt wird der Einsatz von zwei Trennlinern verschiedener Dicke. Sehr bevorzugt wird bei der Herstellung der doppelseitig haftklebrigen Produkte die Haftklebeschicht, die als erstes auf dem Zielsubstrat verklebt werden soll, mit dem dünneren Trennliner nach der Beschichtung und Trocknung eingedeckt. Der dickere Trennliner wird in diesem Szenario bevorzugt direkt mit der Klebmasse für die als zweites zu verklebende Haftklebeschicht beschichtet.

Die Trennschichten in Trennliner A und B, bzw. der Oberseite und Unterseite in doppelseitigen Trennlinern können unabhängig voneinander im Hinblick auf Rohstoffklasse, Vernetzungsart, Vernetzungsgrad, Formulierung, physikalischer Vorbehandlung, chemischer Vorbehandlung und/oder Schichtauftrag sowie im Hinblick auf eine etwaige Strukturierung ausgewählt werden.

Doppelseitig mit Trennschichten ausgerüstete Trennliner weisen bevorzugt eine Dicke von mindestens 20 μm auf und von weniger als 150 μm. Für einseitig mit Trennschicht ausgestattete Trennliner wird derselbe Wertebereich bevorzugt.

Kommen Trennlinerkombinationen zum Einsatz, dann können die Dicken von Trennliner A und Trennliner B gleich oder verschieden sein. Geeignete Trennlinerdicken liegen wiederum zwischen 20 μm und 150 μm. Besonders vorteilhafte Trennlinerdickenkombinationen bestehen aus Trennlinern mit Dicken im Bereich von jeweils 30 μm bis 80 μm. Besonders vorteilhafte Trennlinerdickenkombinationen sind 36 μm (Dicke von Trennliner A) und 50 μm (Dicke von Trennliner B) bzw. umgekehrt sowie 50 μm und 75 μm bzw. umgekehrt.

Die zumindest eine Trägerschicht wird bevorzugt aus Lösung oder wässriger Dispersion gegossen. Hierzu bieten sich alle aus dem Stand der Technik bekannten Verfahren an.

Aber auch lösungsmittelfreie Verfahren sind denkbar, sofern über sie die anspruchsvollen optischen Eigenschaften des Trägermaterials erreicht werden können. Dem Fachmann sind Verfahren bekannt, die in diesem Sinne erfolgreich eingesetzt werden können, beispielsweise solche, die polierte Oberflächen als bahn- oder massefilmführende Elemente wie vor allem Walzen nutzen. Sehr gut geeignet sind auch Mehrkomponentenverfahren, z. B. Zweikomponentenverfahren. Sind die eingesetzten Reaktivkomponenten so eingestellt, dass ihre Viskosität bei der Arbeitstemperatur niedrig genug ist, dann kann in entsprechenden Verfahren auch ohne Lösungsmittel ein hervorragendes Beschichtungsbild erzeugt werden. Als Beispiel für ein entsprechendes Massesystem und Verfahrenskonzept sei US 7,605,212 B2 der tesa SE genannt. Solche und weitere Verfahren sind zum Beispiel auch aus dem Bereich der Polyurethane bekannt.

Erfindungsgemäße doppelseitig haftklebrige Produkte können nach an sich bekannten Verfahren hergestellt werden. Es sind verschiedene Abfolgen von Beschichtungs- und Kaschiervorgängen denkbar und vorteilhaft einsetzbar. Hier sei nur ein Beispiel genannt, das gut geeignet ist. Danach wird eine erste Trennlinerbahn zunächst mit einer ersten Haftklebemasse beschichtet. Vorteilhaft geschieht dies mit einer lösungsmittelhaltigen Formulierung, die anschließend getrocknet wird. Bevorzugt wird die Haftklebemasse so ausgewählt, dass ihre Vernetzung zumindest teilweise während des Trocknungsprozesses abläuft. Es kann vorteilhaft sein, dass der Vernetzungsprozess zum Ende des Trocknungsprozesses abgeschlossen ist. Im Anschluss wird eine Trägerbahn zukaschiert und als Zwischenprodukt aufgewickelt. Dieses Zwischenprodukt wird einer zweiten Haftklebeschicht zukaschiert, die zuvor auf eine zweite Trennlinerbahn beschichtet wurde. Vorteilhaft geschieht dies mit einer lösungsmittelhaltigen Formulierung, die anschließend getrocknet wird. Bevorzugt wird die Haftklebemasse so ausgewählen, dass ihre Vernetzung zumindest teilweise während des Trocknungsprozesses abläuft. Es kann vorteilhaft sein, dass der Vernetzungsprozess zum Ende des Trocknungsprozesses abgeschlossen ist.

Wird die Trägerschicht aus Lösung gegossen, dann erfolgt dies vorteilhaft auf einem Prozessliner. Nach Trocknung kann die Bahn mit einem weiteren Prozessliner eingedeckt werden oder, sofern der erste Prozessliner rückseitig trennend ausgerüstet ist, auf sich selbst aufgewickelt werden. Zur Weiterverbeitung im zuvor angedeuteten Kaschierprozess wird nach der Abwicklung dieser Trägerschichtbahn zunächst einer der Prozessliner ausgedeckt. Diese dann offene Seite wird der offenen Haftklebeschicht zukaschiert.

Ballenware kann im Anschluss nach Wunsch konfektioniert werden, so beispielsweise in Mutterrollen oder Streifen geschnitten werden oder in Folienblätter geschnitten, gestanzt oder abgelängt werden. Dem Fachmann sind weitere Verfahren zur Herstellung von doppelseitig selbstklebenden Produkten wie Klebebändern, -etiketten und -folien bekannt, die ebenfalls für erfindungsgemäße Produkte eingesetzt werden können.

Erfindungsgemäße doppelseitig selbstklebende Produkte eignen sich zum verbindenden Kleben von zwei Objekten. Sehr bevorzugt ist die Verwendung in Verklebungsaufgaben, bei denen es auf besonders hohe optische Qualität der Verklebung ankommt. Dazu zählen Verklebungen optischer Bauteile und/oder Folien aller Art wie zum Beispiel in Displays aber auch in großflächigen Glasverklebungen. Insofern betrifft die vorliegende Erfindung ebenfalls die Verwendung der genannten Produkte zur Verklebung transparenter Substrate.

Erfindungsgemäße doppelseitig selbstklebende Produkte eignen sich auf Grund der zugänglichen hohen Schichtstärke hervorragend, um bei der Verklebung topographische Eigenheiten der zu verklebenden Substrate wie Welligkeit, Rauhigkeit, Krümmung, Biegung und Strukturierungen jedweder Art auszugleichen. Ihre Verwendung zu diesem Zweck ist ebenfalls Teil dieser Erfindung.

Gleichzeitig eignen sich erfindungsgemäße doppelseitig selbstklebende Produkte hoher Schichtstärke zudem besser bei der Laminierung insbesondere starrer Substrate wie optischer Gläser. Die vorliegende Erfindung betrifft die Verwendung erfindungsgemäßer doppelseitig selbstklebender Produkte zu diesem Zweck.

Besonders vorteilhaft erweisen sich erfindungsgemäße doppelseitig selbstklebende Produkte dadurch, dass sie zwar einerseits hervorragende Laminier- und Oberflächenausgleichseigenschaften bieten, gleichzeitig aber trotzdem und überraschend auch sehr gut schneid- und stanzbar sind, so dass aus Folien erfindungsgemäßer doppelseitig selbstklebender Produkte unschwer Stanzlinge hergestellt werden können. Entsprechend sind Teil dieser Erfindung gestanzte Laminierfolien, die aus erfindungsgemäßen doppelseitig haftklebrigen Produkten erhältlich sind.

### Testmethoden

Testmethode A - Elastizitätsmodul:

Der Elastizitätsmodul gibt den mechanischen Widerstand an, den ein Werkstoff einer elastischen Verformung entgegensetzt. Er wird bestimmt als das Verhältnis der erforderlichen Spannung $\sigma$ zur erzielten Dehnung $\varepsilon$, wobei $\varepsilon$ der Quotient aus der Längenänderung $\Delta L$ und der Länge $L_0$ im Hookeschen Verformungsregime des Probekörpers ist. Die Definition des Elastizitätsmoduls ist beispielsweise im Taschenbuch der Physik erläutert (H. Stöcker (Hrsg.), Taschenbuch der Physik, 2. Aufl., 1994, Verlag Harri Deutsch, Frankfurt, S. 102 - 110).

Zur Bestimmung des Elastizitätsmoduls wurde zunächst das Zugdehnungsverhalten der Prüfmuster an Prüflingen vom Typ 2 (rechteckige 150 mm lange und 15 mm breite Prüfstreifen haftklebriger Produkte) nach DIN EN ISO 527-3/2/300 mit einer Prüfgeschwindigkeit von 300 mm/min, einer Einspannlänge von 100 mm und einer Vorkraft von 0,3 N/cm ermittelt, wobei Muster zur Ermittlung der Daten mit scharfen Klingen zugeschnitten wurde. Zum Einsatz kam eine Zugprüfmaschine der Fa. Zwick (Modell Z010). Das Zugdehnungsverhalten wurde in Maschinenrichtung (MD) gemessen. Zum Einsatz kam ein 1000 N (Zwick Roell Typ Kap-Z 066080.03.00) bzw. 100 N (Zwick Roell Typ Kap-Z 066110.03.00) Kraftmessdose. Der Elastizitätsmodul wurde aus den Messkurven grafisch durch Bestimmung der Steigung des für das Hookesche-Verhalten charakteristischen Anfangsbereichs der Kurve ermittelt und in MPa angegeben.

Testmethode B - Haze (Großwinkelstreuung), Transmission:

Die Bestimmung von Transmission und Haze erfolgte nach ASTM D1003 an einem hazegard plus der Firma Byk-Gardner. Hierzu wurde gemäß ASTM D1003 vorgegangen, wobei zunächst Muster der doppelseitigen haftklebrigen Produkte von den Trennlinern befreit und auf die Musterhalterung appliziert wurden.

Testmethode C - Klebmasse Ausquetschtest (Oozing):

Zur Prüfung wurden Klebebandmuster, die noch beidseitig mit Trennlinern (jeweils 50 $\mu$m silikonisierte PET-Folie) eingedeckt waren, herangezogen. Von den Proben werden runde Stanzlinge mit einem Durchmesser von 29 mm hergestellt und zwischen zwei überstehenden Lagen einer transparenten PET-Folie platziert. Dieser Aufbau wird in einer Heißpresse für 30 Sekunden mit einer Kraft von 800 N unter 80°C belastet. Nach dem Abkühlen wurden die Prüflinge optisch unter Zuhilfenahme eines Messschiebers (Messgenauigkeit $\pm$ 0,05 mm) inspiziert. Gemessen wurde der aus der Verpressung resultierende Außendurchmesser der Prüflinge. Aus den Flächenverhältnissen (Ausgangsfläche $A_{initial}$, Endfläche $A_{final}$) lässt sich nach folgender Formel das so genannte Oozingverhältnis OR berechnen:

$$OR = [(A_{final}-A_{initial}) / A_{initial}] *100\%$$

Testmethode D - Laminierverhalten:

Muster doppelseitig haftklebriger Produkte wurden von einem Trennliner befreit und mit einem gummierten Handroller auf die bedruckte Seite einer transparenten PET Folie laminiert, wobei die Bedruckung aus einer schwarzen, vollflächigen und blickdichten Druckschicht mit einer Druckstärke von 10 $\mu$m bestand, in der kreisförmige Aussparungen unterschiedlicher Durchmesser (0,18mm, 0,20mm, 0,30mm, 0,40mm, 0,50mm, 0,60mm, 0,70mm, 0,80mm, 0,90mm, 1,0mm) vorgesehen waren. Beim Laminiervorgang wurde darauf geachtet, dass der Handroller stets nur in eine Richtung angewendet wurde; auf ein Laminieren unter Anwendung des Handrollers in entgegengesetzte Richtungen wurde verzichtet. Anschließend wurde der zweite Trennliner entfernt und der Verbund auf eine 3 mm starke, transparente Polycarbonatplatte laminiert. Die Laminate wurden anschließend im Bereich der Aussparungen der Bedruckung durch die PET-Folie mit einem Lichtmikroskop (NSK Japan, Nissho Optical Co., Ltd., TZ-240 010/24T, Vergrößerung 10-fach bis 60-fach) inspiziert. Zur Qualifizierung des Laminierergebnisses wurde die etwaige Existenz von Luftblasen innerhalb der kreisförmigen Bedruckungsaussparungen genutzt. Zur Quantifizierung und Unterscheidung verschiedener Prüfmuster wird der kleinste Kreisdurchmesser angegeben, der noch komplett mit Klebmasse ausgefüllt und blasenfrei ist.

Testmethode E - Brechungsindex:

Der Brechungsindex wurde mit dem Optronic Meßgerät der Fa. Krüss bei 25 °C und weißem Licht ($\lambda$ = 550 nm $\pm$ 150 nm) nach dem Abbeschen Prinzip gemessen. Zur Temperaturstabilisierung wurde das Gerät in Verbindung mit einem Thermostaten der Fa. Lauda betrieben. Zur Herstellung der Haftklebeschichtmuster wurde Klebemasse auf einen Trennliner beschichtet, getrocknet und mit einem zweiten Trennliner abgedeckt. Zur Messung wurden beide Trennliner ausgedeckt. Zur Herstellung der Trägerschichtmuster wurde die Ausgangsformulierung auf einen Trennliner beschichtet und getrocknet. Zur Messung wurde der Trennliner ausgedeckt. Im Falle der als Folie vorliegenden Trägerschichtmuster wurde ein Abschnitt dieses Materials ohne weitere Vorbehandlung vermessen. Die Messungen wurden an jeder Probe dreimal durchgeführt; die erhaltenen Werte wurden gemittelt.

*Beispiele*

Beispiel 1:

Ein Polyacrylat mit 7 Gew.-% Acrylsäure-Anteil im Copolymer und einem k-Wert nach Fikentscher [P. E. Hinkamp, Polymer, 1967, 8, 381] von 55 wurde mit 0,6 Gew.-% (bezogen auf den Feststoffgehalt des Polymers) Aluminiumchelat vernetzt und mittels Rakelverfahren als 31 Gew.-%ige Lösung in einem Gemisch aus Aceton/Benzin/Ethylacetat auf einen Trennliner A (erste Trennschicht) beschichtet, zunächst für 20 min bei Raumtemperatur und anschließend bei 120 °C für 15 min getrocknet und mit Trennliner B (zweite Trennschicht) eingedeckt. Die Schichtstärke der so erzeugten Haftklebeschicht betrug nach Trocknung 50 $\mu$m. Das Design entsprach dem eines Transferklebebands. Als Trennliner A kam ein siliconisiertes 50 $\mu$m PET-Folien basierendes System zum Einsatz. Als Trennliner B wurde ein silikonisiertes, in Bezug auf Trennliner A leichter trennendes 36 $\mu$m PET-Folien basierendes System ausgewählt. Die so erhaltenen Haftklebemasseschichten wurden Test E unterzogen.
Ein Trägermaterial wurde erzeugt durch Beschichtung einer Lösung eines thermoplastischen Elastomers (LA 4285 der Firma Kuraray) auf einen silikonisierten 50 $\mu$m PET-Prozessliner. Die Schichtstärke des Trägers betrug nach Trocknung 125 $\mu$m. Muster dieses Trägermaterials ohne Prozessliner wurden Test A unter Verwendung der 100N Messdose und Test E unterzogen.
Nach Ausdeckung des 36 $\mu$m Liners (Trennliner B) wurde das Transferklebeband mit einem gummierten Handroller auf die offene Seite der Trägerschicht laminiert. Anschließend wurde der Prozessliner entfernt und eine zweite Lage eines vom 36 $\mu$m Liner (Trennliner B) befreiten Transferklebebandes zukaschiert. Das komplette Klebeband ohne Liner wies eine Schichtstärke von 225 $\mu$m auf. Prüfmuster dieser Art wurden Test B, C und D unterzogen.

Beispiel 2 (Vergleichsbeispiel):

Ein Polyacrylat mit 7 Gew.-% Acrylsäure-Anteil im Copolymer und einem k-Wert nach Fikentscher [P. E. Hinkamp, Polymer, 1967, 8, 381] von 55 wurde mit 0,6 Gew.-% (bezogen auf den Feststoffgehalt des Polymers) Aluminiumchelat vernetzt und mittels Rakelverfahren als 31 Gew.-%ige Lösung in einem Gemisch aus Aceton/Benzin/Ethylacetat auf einen Trennliner A (erste Trennschicht) beschichtet, zunächst für 20 min bei Raumtemperatur und anschließend bei 120 °C für 15 min getrocknet und mit Trennliner B (zweite Trennschicht) eingedeckt. Die Schichtstärke der Haftklebeschicht betrug nach Trocknung 50 $\mu$m. Das Design entsprach dem eines Transferklebebands. Als Trennliner A kam ein siliconisiertes 50 $\mu$m PET-Folien basierendes System zum Einsatz. Als Trennliner B wurde ein siliconisiertes, leichter trennendes 36 $\mu$m PET-Folien basierendes System ausgewählt. Die so erhaltenen Haftklebemasseschichten wurden Test E unterzogen.

Ein Trägermaterial wurde erzeugt wie folgt:

Ein Polyacrylat mit 3 % Acrylsäure-Anteil im Copolymer und einem k-Wert nach Fikentscher [P. E. Hinkamp, Polymer, 1967, 8, 381] von 70 wurde mit 0,6 Gew.-% (bezogen auf den Feststoffgehalt des Polymers) Aluminiumchelat vernetzt und mittels Rakelverfahren als 31 Gew.-%ige Lösung in einem Gemisch aus Aceton/Benzin/Ethylacetat auf einen Trennliner A (erste Trennschicht) beschichtet, zunächst für 20 min bei Raumtemperatur und anschließend bei 120 °C für 15 min getrocknet und mit Trennliner B (zweite Trennschicht) eingedeckt. Dieses Polymersystem war durch seine Zusammensetzung, Molmassenverteilung und Vernetzung haftklebrig eingestellt. Die Schichtstärke dieser Schicht betrug nach Trocknung 125 $\mu$m. Das Design entsprach dem eines Transferklebebands. Als Trennliner A kam ein siliconisiertes 50 $\mu$m PET-Folien basierendes System zum Einsatz. Als Trennliner B wurde ein siliconisiertes, leichter trennendes 36 $\mu$m PET-Folien basierendes System ausgewählt.
Muster dieses sehr weichen Trägermaterials ohne Trennliner wurden Test A unter Verwendung der 100N Messdose und Test E unterzogen.
Nach Ausdeckung des 36 $\mu$m Liners wurde das Transferklebeband mit einem gummierten Handroller auf diejenige Seite der haftklebrigen Trägerschicht laminiert, die von dem 36 $\mu$m Trennliner befreit worden war. Anschließend wurde der 50 $\mu$m Trennliner von der haftklebrigen Trägerschicht entfernt und eine zweite Lage eines vom 36 $\mu$m Trennliner befreiten Transferklebebandes zukaschiert. Das komplette Klebeband ohne Liner wies eine Schichtstärke von 225 $\mu$m auf. Prüfmuster dieser Art wurden Test B,C,D unterzogen.

Beispiel 3 (Vergleichsbeispiel):

Ein Polyacrylat mit 7 % Acrylsäure-Anteil im Copolymer und einem k-Wert nach Fikentscher [P. E. Hinkamp, Polymer, 1967, 8, 381] von 55 wurde mit 0,6 % Aluminiumchelat vernetzt und mittels Rakelverfahren als Lösung auf einen Trennliner A (erste Trennschicht) beschichtet, zunächst für 20 min bei Raumtemperatur und anschließend bei 120 °C für 15 min getrocknet und mit Trennliner B (zweite Trennschicht) eingedeckt. Die Schichtstärke der Haftklebeschicht betrug nach Trocknung 50 μm. Das Design entsprach dem eines Transferklebebands. Als Trennliner A kam ein silikonisiertes 50 μm PET-Folien basierendes System zum Einsatz. Als Trennliner B wurde ein silikonisiertes, leichter trennendes 36 μm PET-Folien basierendes System ausgewählt. Haftklebemasseschichten wurden Test E unterzogen. Als Trägerschicht kam eine 125 μm dicke PET Folie zum Einsatz, die einen Haze von etwa 1% aufwies. Muster dieses Trägersystems wurden Test A unter Verwendung der 1000N Messdose und Test E unterzogen.

Nach Ausdeckung des 36μm Liners wurde das Transferklebeband mit einem gummierten Handroller auf eine erste Seite der Trägerfolie laminiert. Anschließend wurde eine zweite Lage eines vom 36μm befreiten Transferklebebandes zur zweiten Seite der Trägerfolie zukaschiert. Das komplette Klebeband ohne Liner wies eine Schichtstärke von 225 μm auf. Prüfmuster dieser Art wurden Test B,C,D unterzogen.

Beispiel 4 (Vergleichsbeispiel):

Ein Polyacrylat mit 7 % Acrylsäure-Anteil im Copolymer und einem k-Wert nach Fikentscher [P. E. Hinkamp, Polymer, 1967, 8, 381] von 55 wurde mit 0,6 % Aluminiumchelat vernetzt und mittels Rakelverfahren als Lösung auf einen Trennliner A (erste Trennschicht) beschichtet, zunächst für 20 min bei Raumtemperatur und anschließend bei 120 °C für 15 min getrocknet und mit Trennliner B (zweite Trennschicht) eingedeckt. Die Schichtstärke der Haftklebeschicht betrug nach Trocknung 225 μm. Das Design entsprach dem eines Transferklebebands. Als Trennliner A kam ein silikonisiertes 50 μm PET-Folien basierendes System zum Einsatz. Als Trennliner B wurde ein silikonisiertes, leichter trennendes 36 μm PET-Folien basierendes System ausgewählt. Klebebänder dieser Art enthielten kein weiteres Trägersystem und entsprachen damit dem Design eines Transferklebebandes.

Prüfmuster dieser Art wurden Test A (100N Messdose), B, C, D, E unterzogen.

- Tabelle 1 -

|  | Beispiel 1 (Erfindung) | Beispiel 2 (Referenz) | Beispiel 3 (Referenz) | Beispiel 4 (Referenz) |
|---|---|---|---|---|
| Haftklebeschicht 1 | 50μm Polyacrylat | 50μm Polyacrylat | 50μm Polyacrylat | 225μm Polyacrylat |
| Trägerschicht | 125μm erfindungsgemäßer elastischer Träger | 125 μm haftklebriges Polyacrylat | 125 μm PET Folie | keine |
| Haftklebeschicht 2 | 50μm Polyacrylat | 50μm Polyacrylat | 50μm Polyacrylat | keine |
| **Testmethode** |  |  |  |  |
| A Elastizitätsmodul | 318 MPa | nicht messbar | 3450 MPa | nicht messbar |
| B Haze | 0,94 % | 0,54 % | 1,62 % | 0,14% |
| B Transmission | 94,9 % | 94,9 % | 93,8 % | 94,9 % |
| C Oozing | 5 % | 14 % | 2 % | 15 % |
| D Laminierverhalten | 0,4 mm | < 0,18 mm | 0,8 mm | < 0,18 mm |
| E Brechungsindex Klebmasseschicht 1&2 | 1,474 | 1,474 | 1,474 | 1,474 |
| E Brechungsindex Trägerschicht | 1,480 | 1,476 | 1,650 | -/- |

Tabelle 1 fasst die Untersuchungsergebnisse der nach den Beispielen 1 bis 4 hergestellten Prüfmuster zusammen. Für optisch hochwertige doppelseitig haftklebrige Produkte wird eine prinzipiell so gering wie mögliche Neigung zu Klebmasseausbluten erwartet, um eine gute Handhabbarkeit und Weiterverarbeitbarkeit zu gewährleisten. Oozing-Werte oberhalb 10 % führen bereits zu merklicher Seitenkantenklebrigkeit und sind daher nachteilig. Gleichzeitig wird von optisch hochwertigen doppelseitig haftklebrigen Produkten verlangt, dass sie möglichst gut laminierbar sind, eine Anforderung, die der vorgenannten diametral entgegensteht. Die Laminierbarkeit nach Test D, ausgedrückt durch den kleinsten Durchmesser einer kreisförmigen Aussparung im Druckbild, die gerade noch luftblasenfrei in einem Laminierprozess mit Klebemasse ausgefüllt wird, soll möglichst so gut (der Durchmesser so klein) wie möglich sein. Je kleiner der gegebene Wert, desto besser ist ein haftklebriges Produkt in der Lage, topographische Höhenunterschiede auszugleichen, ohne dass es im Bereich der Übergänge erhabener Bereiche zu Lufteinschlüssen (Blasenbildung) und somit zu einer Beeinträchtigung der optischen Qualität kommt.

Der Elastizitätsmodul war nicht für alle Produktaufbauten messbar. Doppelseitig haftklebrige Produkte nach Beispiel 2 und Beispiel 4 ließen sich nicht in ausreichender Qualität vom zweiten Trennliner befreien, um nach Test A auf den Elastizitätsmodul hin untersucht zu werden. Dies allein ist bereits ein qualitatives Indiz für einen zu geringen Elastizitätsmodul. Die für eine Dehnung dieser doppelseitig haftklebrigen Produkte erforderliche Kraft liegt offenbar in der Größenordnung oder sogar unterhalb der für ein Ablösen der Klebeschicht vom zweiten Trennliner erforderlichen Trennkraft (diese lag bei 0,02 N/mm).

Es zeigt sich, dass erfindungsgemäße Prüfmuster die gestellten Anforderungen erfüllen, während nicht-erfindungsgemäße Prüfmuster nicht dazu in der Lage sind, topographische Höhenunterschiede auszugleichen und gleichzeitig ein kritisches Oozing-Verhalten zu vermeiden.

**Patentansprüche**

1. Verwendung eines doppelseitig haftklebrigen Produkts mit einem Haze-Wert (gemessen nach der in der Beschreibung dargestellten Testmethode B) von 5 % oder weniger, umfassend

   einen Träger, bestehend aus Triblockcopolymeren aus Polymethylmethacrylat- Endblöcken und Polybutylacrylat-Mittelblöcken, mit einer ersten Oberfläche und einer zweiten Oberfläche sowie eine erste, auf der ersten Oberfläche des Trägers angeordnete Haftklebmassenschicht auf (Meth)acrylatbasis, und

   eine zweite, auf der zweiten Oberfläche des Trägers angeordnete Haftklebmassenschicht auf (Meth)acrylatbasis, **dadurch gekennzeichnet, dass** der Träger einen Elastizitätsmodul (gemessen nach der in der Beschreibung dargestellten Testmethode A) von 2,5-500 MPa aufweist, beim Verkleben optischer Bauteile, die topographische Höhenunterschiede von mehr als 100 $\mu$m aufweisen.

2. Verwendung gemäß Anspruch 1, **dadurch gekennzeichnet, dass** der Träger einen Elastizitätsmodul (gemessen nach der in der Beschreibung dargestellten Testmethode A) von 5-250 MPa aufweist.

3. Verwendung gemäß einem der Ansprüche 1 oder 2, **dadurch gekennzeichnet, dass** der Unterschied der Brechungsindices (gemessen nach der in der Beschreibung dargestellten Testmethode E) der ersten und der zweiten Haftklebmasseschichten in Bezug auf den Brechungsindex des Trägers jeweils kleiner ist als 0,1.

4. Gegenstand umfassend optische Bauteile, die topographische Höhenunterschiede von mehr als 100 $\mu$m aufweisen, die mit wenigstens einem doppelseitig haftklebrigen Produkt mit einem Haze-Wert (gemessen nach der in der Beschreibung dargestellten Testmethode B) von 5 % oder weniger, umfassend

   einen Träger, bestehend aus Triblockcopolymeren aus Polymethylmethacrylat- Endblöcken und Polybutylacrylat-Mittelblöcken, mit einer ersten Oberfläche und einer zweiten Oberfläche sowie eine erste, auf der ersten Oberfläche des Trägers angeordnete Haftklebmassenschicht auf (Meth)acrylatbasis, und

   eine zweite, auf der zweiten Oberfläche des Trägers angeordnete Haftklebmassenschicht auf (Meth)acrylatbasis, wobei der Träger einen Elastizitätsmodul (gemessen nach der in der Beschreibung dargestellten Testmethode A) von 2,5 - 500 MPa aufweist, verklebt sind.

**Claims**

1. Use of a double-sidedly pressure-sensitively adhesive product having a haze value (measured by test method B as set out in the description) of 5% or less, comprising

   a carrier consisting of triblock copolymers consisting of polymethyl methacrylate end blocks and polybutyl acrylate middle blocks, and having a first surface and a second surface, and also a first layer of pressure-sensitive adhesive based on (meth)acrylate, and disposed on the first surface of the carrier, and

   a second layer of pressure-sensitive adhesive based on (meth)acrylate, and disposed on the second surface of the carrier,

**characterized in that** the carrier has a modulus of elasticity (measured by test method A as set out in the description) of 2.5-500 MPa,
in the adhesive bonding of optical components which have topographical height differences of more than 100 μm.

2. Use according to Claim 1, **characterized in that** the carrier has a modulus of elasticity (measured by test method A as set out in the description) of 5-250 MPa.

3. Use according to either of Claims 1 and 2, **characterized in that** the difference in the refractive indices (measured by test method E as set out in the description) of the first and second layers of pressure-sensitive adhesive in relation to the refractive index of the carrier is in each case less than 0.1.

4. Article comprising optical components having topographical height differences of more than 100 μm, which are adhesively bonded with at least one double-sidedly pressure-sensitively adhesive product having a haze value (measured by test method B as set out in the description) of 5% or less, comprising
a carrier consisting of triblock copolymers consisting of polymethyl methacrylate end blocks and polybutyl acrylate middle blocks, and having a first surface and a second surface, and also a first layer of pressure-sensitive adhesive based on (meth)acrylate, and disposed on the first surface of the carrier, and
a second layer of pressure-sensitive adhesive based on (meth)acrylate, and disposed on the second surface of the carrier,
wherein the carrier has a modulus of elasticity (measured by test method A as set out in the description) of 2.5-500 MPa.

**Revendications**

1. Utilisation d'un produit autoadhésif double face présentant une valeur de voile (Haze - mesurée selon le procédé de test B présenté dans la description) de 5% ou moins, comprenant
un support, constitué par des copolymères à trois blocs, constitués par des blocs terminaux en poly(méthacrylate de méthyle) et des blocs centraux en poly(acrylate de butyle), présentant une première surface et une deuxième surface ainsi que
une première couche de masse autoadhésive à base de (méth)acrylate disposée sur la première surface du support et une deuxième couche de masse autoadhésive à base de (méth)acrylate disposée sur la deuxième surface du support,
**caractérisée en ce que** le support présente un module d'élasticité (mesuré selon le procédé de test A présenté dans la description) de 2,5-500 MPa,
lors du collage de composants optiques, qui présentent des différences de hauteur topographique supérieures à 100 μm.

2. Utilisation selon la revendication 1, **caractérisée en ce que** le support présente un module d'élasticité (mesuré selon le procédé de test A présenté dans la description) de 5-250 MPa.

3. Utilisation selon l'une quelconque des revendications 1 ou 2, **caractérisée en ce que** la différence de l'indice de réfraction (mesuré selon le procédé de test E présenté dans la description) de la première et de la deuxième couche de masse autoadhésive, par rapport à l'indice de réfraction du support, est à chaque fois inférieure à 0,1.

4. Objet comprenant des composants optiques, qui présentent des différences de hauteur topographique supérieures à 100 μm, qui sont collés à l'aide d'au moins un produit autoadhésif double face présentant une valeur de voile (Haze - mesurée selon le procédé de test B présenté dans la description) de 5% ou moins, comprenant un support, constitué par des copolymères à trois blocs, constitués par des blocs terminaux en poly(méthacrylate de méthyle) et des blocs centraux en poly(acrylate de butyle), présentant une première surface et une deuxième surface ainsi que
une première couche de masse autoadhésive à base de (méth)acrylate disposée sur la première surface du support et une deuxième couche de masse autoadhésive à base de (méth)acrylate disposée sur la deuxième surface du support,
le support présentant un module d'élasticité (mesuré selon le procédé de test A présenté dans la description) de 2,5-500 MPa.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1953191 A

- US 7605212 B2

### In der Beschreibung aufgeführte Nicht-Patentliteratur

- **J. MURPHY.** The Additives for Plastics Handbook. Elsevier, 1996, 2-9
- **D. SATAS.** Handbook of Pressure Sensitive Adhesives Technology. Satas & Associates, 1999, 632-651
- Adhesion Science and Engineering. **D. J. KINNING ; H. M. SCHNEIDER.** Surfaces, Chemistry & Applications. Elsevier, 2002, vol. 2, 535-571

- **D. JONES ; Y. A. PETERS.** Handbook of Pressure Sensitive Adhesives Technology. Satas & Associates, 1999, 652-683
- Taschenbuch der Physik erläutert. **HARRI DEUTSCH ; FRANKFURT, S.** Taschenbuch der Physik. Verlag, 1994, 102-110
- **P. E. HINKAMP.** *Polymer,* 1967, vol. 8, 381